(19) Europäisches Patentamt
European Patent Office
Office européen des brevets

(11) Publication number: 0 082 373
B1

(12) **EUROPEAN PATENT SPECIFICATION**

(45) Date of publication of patent specification: **09.10.85**

(51) Int. Cl.$^4$: **C 08 G 12/16**, C 08 G 12/40, D 21 H 3/54

(21) Application number: **82111198.6**

(22) Date of filing: **03.12.82**

# (54) Dicyandiamide-formaldehyde condensates and process for preparing the same.

(30) Priority: **08.12.81 US 328751**
**08.12.81 US 328752**
**08.12.81 US 328753**
**08.12.81 US 328754**

(43) Date of publication of application:
**29.06.83 Bulletin 83/26**

(45) Publication of the grant of the patent:
**09.10.85 Bulletin 85/41**

(84) Designated Contracting States:
**AT BE DE FR GB IT NL SE**

(56) References cited:
**US-A-3 840 486**
**US-A-4 000 184**

(73) Proprietor: **HERCULES INCORPORATED**
**Hercules Plaza**
**Wilmington Delaware 19899 (US)**

(72) Inventor: **Bankert, Ralph Allen**
**28 The Strand**
**New Castle Delaware 19720 (US)**
Inventor: **Dumas, David Howard**
**2217 West 11th Street**
**Wilmington Delaware 19805 (US)**

(74) Representative: **Lederer, Franz, Dr. et al**
**Patentanwälte Dr. Lederer Franz Meyer-Roxlau**
**Reiner F. Lucile-Grahn-Strasse 22**
**D-8000 München 80 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 082 373 B1

**Description**

This invention relates to novel water-soluble, thermosettable resinous compositions containing dicyandiamideformaldehyde condensates and more particularly relates to the compositions produced by reacting a precondensate of dicyandiamide, formaldehyde, an acid salt of a water-soluble polyaminopolyamide and an ammonium salt with epihalohydrin, acrylamide or urea, and then condensing the reaction product with formaldehyde. The resinous compositions are cationic and water-soluble and have particular utility in the manufacture of sized paper wherein the sizing agent employed is a cellulose reactive sizing agent such as a ketene dimer sizing agent.

In U.S. Patent 3,840,486, Dumas describes water-soluble, cationic, thermosettable resinous compositions derived from dicyandiamide, an ammonium salt, formaldehyde and an acid salt of a water-soluble polyaminopolyamide and teaches their preparation by forming a precondensate by heat reacting in aqueous medium 1 mole of dicyandiamide, from 0.75 to 1.5 moles of formaldehyde, sufficient of an acid salt of a polyaminopolyamide to provide about 0.125 to about 0.5 equivalent of basic nitrogen and an ammonium salt in an amount to provide a total of from 0.8 to about 1.2 equivalents of basic nitrogen until substantially all nitriles of the dicyandiamide have reacted, adding from about 1.25 to about 3.75 moles of formaldehyde to the aqueous precondensate and refluxing the resulting mixture until the viscosity of a solution of the product is within a desired range. The resinous compositions of U.S. Patent 3,840, 486 are said to be useful as accelerators for hydrophobic cellulose reactive sizing agents and the combination is reported to provide higher off-the-machine sizing than is provided by an equivalent amount of the sizing agent alone. Dumas' resinous compositions, however, do not impart sizing to paper when used alone in amounts normally employed in the paper sizing art and the use of Dumas' resinous compositions in combination with cellulose reactive sizes as sizing agents in the manufacture of paper does not provide an ultimate degree of sizing which is substantially different from that achieved with the sizing agent alone. Since nearly all grades of paper are sized to some extent, increased sizing efficiency is an important objective of papermakers and any improvements which can be realized in the degree of sizing can have pronounced economic significance.

Now, in accordance with this invention, it has been found that unique resins are produced by modifying the process of U.S. Patent 3,840,486 and that the modified resins so produced provide higher ultimate sizing with cellulose reactive sizing agents such as ketene dimers, acid anhydrides and isocyanates on natural aging or oven curing as compared with the unmodified resins. Further, the resins produced in accordance with this invention accelerate the rate of sizing development with cellulose reactive sizing agents and thus increase the overall efficiency of the sizing agents.

Accordingly, the present invention relates to a process for preparing improved water-soluble thermosettable resinous compositions containing dicyandiamide-formaldehyde condensates, which process comprises (1) forming a precondensate solution by refluxing for 1 to 4 hours an aqueous mixture of (a) a base reaction product of 1 mole of dicyandiamide, 0.75 mole to 1.5 moles of formaldehyde and an acid salt of a water-soluble polyaminopolyamide in an amount sufficient to provide from 0.125 to 0.5 equivalent of basic nitrogen and (b) an ammonium salt in an amount such that there will be from 0.7 equivalent to 1.2 equivalents of basic nitrogen derived from the salt of the polyaminopolyamide and the ammonium salt in the aqueous medium, (2) adding to the precondensate solution from 0.30 to 0.45 mole of epihalohydrin, acrylamide or urea per equivalent of basic nitrogen derived from the salt of the polyaminopolyamide and the ammonium salt, and heating the aqueous mixture at 50° to 110°C. for 0.25 hour to 1.5 hours until a solution of modified precondensate is formed, (3) adding from 1.25 to 3.75 moles of formaldehyde to the aqueous solution of modified precondensate and (4) heating the resulting mixture at 60° to 100°C. until the viscosity of an aqueous solution of the resulting reaction product at a solids content of 50% is from about U to Z on the Gardner-Holdt scale, and to the resinous compositions so produced.

As above set forth, dicyandiamide is one of the reactants employed in preparing the precondensate in the first step of the process of this invention. Dicyandiamide is also known as cyanoguanidine and has the following structure:

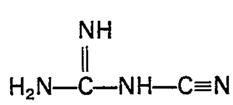

Formaldehyde is another reactant employed to prepare the precondensate. As employed in this specification and in the claims, formaldehyde includes formaldehyde in the form of 30—40% aqueous solutions and polymeric forms of formaldehyde such as, for example, paraformaldehyde, trioxane, and hexamethylenetetramine. Chemical compounds such as acetals which will liberate formaldehyde on heating can be employed as a source of formaldehyde if desired.

The ammonium salt reactant is a water-soluble salt of an amine and an acid. Particularly suitable salts are those having the formula $(NH_4)_mX$; $(R_1NH_3)_mX$; or $(R_1R_2NH_2)_mX$ where $R_1$ and $R_2$ are alkyl radicals having from 1 through 4 carbon atoms such as methyl, ethyl, propyl, isopropyl and n-butyl; X is the acid anion such, for example, as $Cl^-$, $Br^-$, $I^-$, $SO_4^=$, $CH_3COO^-$, $NO_3^-$, and $PO_4^{\equiv}$; and m is an integer equal to the anion charge. Specific examples of suitable ammonium salts include ammonium sulfate, ammonium

chloride, methyl ammonium chloride, dimethyl ammonium chloride, ethyl ammonium sulfate, and ammonium acetate.

Other suitable ammonium salts are the water-soluble salts of (1) a polyamine having the structure

$$H_2NC_nH_{2n}(\overset{\displaystyle R_3}{\overset{|}{N}}C_nH_{2n})_xNH_2$$

where $R_3$ is hydrogen or methyl; n is an integer 2 through 6; and x is an integer 0 through 3 and (2) an acid such as sulfuric acid, hydrochloric acid, hydrobromic acid, hydroiodic acid, nitric acid, phosphoric acid and acetic acid. Specific examples of polyamines are ethylene diamine, propylene diamine, hexamethylene diamine, diethylenetriamine, tetraethylenepentamine, and bis(3-aminopropyl)amine.

Another reactant is an acid salt of a water-soluble polyaminopolyamide. The polyaminopolyamide is derived by reaction of a dicarboxylic acid and a polyalkylenepolyamine in a mole ratio of polyalkylenepolyamine to dicarboxylic acid of from 0.8:1 to 1.4:1. Particularly suitable dicarboxylic acids are diglycolic acid and saturated aliphatic dicarboxylic acids containing from 3 through 10 carbon atoms such as malonic acid, succinic acid, glutaric acid, adipic acid, pimelic acid, suberic acid, azelaic acid and sebacic acid. Other suitable dicarboxylic acids include terephthalic acid, isophthalic acid, phthalic acid and alpha-unsaturated dicarboxylic acids such as maleic acid, fumaric acid, itaconic acid, glutaconic acid, citraconic acid and mesaconic acid. The available anhydrides of the above acids can be used for preparing the water-soluble polyaminopolyamide as well as the esters of the acids. Mixtures of two or more of the above acid moieties can be employed, if desired.

A number of polyalkylenepolyamines, including polyethylenepolyamines, polypropylenepolyamines, polybutylenepolyamines and the like can be employed to produce the polyaminopolyamide. The polyalkylenepolyamine employed will have two primary amine groups and can be represented as polyamines in which the nitrogen atoms are linked together by groups of the formula $-C_nH_{2n}-$ where n is a small integer greater than unity and preferably 2 through 6, and the number of such groups in the molecule ranges from two up to eight. The nitrogen atoms can be attached to adjacent carbon atoms in the group $-C_nH_{2n}-$ or to carbon atoms farther apart, but not to the same carbon atoms. Polyamines such as diethylenetriamine, triethylènetetramine, tetraethylenepentamine, and bis(3-aminopropyl)amine, which can be obtained in reasonably pure form are suitable for preparing water-soluble polyaminopolyamides. Other polyalkylenepolyamines that can be used include methyl bis(3-aminopropyl)amine; methyl bis(2-aminoethyl) amine; and 4,7-dimethyltriethylenetetramine. Mixtures of polyalkylenepolyamines can be used, if desired.

The above polyalkylenepolyamines can be represented by the formula

$$H_2NC_nH_{2n}(\overset{\displaystyle R_3}{\overset{|}{N}}C_nH_{2n})_yNH_2$$

wherein $R_3$ is hydrogen or methyl; n is an integer 2 through 6, as above set forth, and y is an integer 1 through 3. Other polyalkylenepolyamines that can be employed and which are not included in the above formula include 1,4-bis(3-aminopropyl)piperazine and 1-(2-aminoethyl)piperazine.

The spacing of an amino group on the polyaminopolyamide can be increased if desired. This can be accomplished by substituting a diamine such as ethylenediamine, propylenediamine, hexamethylenediamine and the like for a portion of the polyalkylenepolyamine. For this purpose, up to about 80% of the polyalkylenepolyamine can be replaced by a molecularly equivalent amount of diamine. Usually, a replacement of about 50% or less will be adequate.

Temperatures employed for carrying out reaction between the dicarboxylic acid and the polyalkylenepolyamine to form the water-soluble polyaminopolyamide can vary from 110°C. to 250°C. or higher at atmospheric pressure. For most purposes, temperatures between 160°C. and 210°C. are preferred. The time of reaction will vary inversely with reaction temperatures employed and usually will be from $\frac{1}{2}$ to 2 hours. The reaction is desirably continued to substantial completion, as determined by the amount of water evolved. In carrying out the reaction, it is preferred to use an amount of dicarboxylic acid sufficient to react substantially completely with the primary amine groups of the polyalkylenepolyamine but insufficient to react with the secondary amine groups and/or tertiary amine groups to any substantial extent. This will usually require a mole ratio of polyalkylenepolyamine to dicarboxylic acid of from 0.9:1 to 1.2:1. However, mole ratios of from 0.8:1 to 1.4:1 can be used.

The following example is illustrative of the preparation of a suitable water-soluble polyaminopolyamide for use as its salt in the preparation of the precondensate.

Example A

A water-soluble polyaminopolyamide for use as its acid salt was formed by adding 146 parts (weight) of adipic acid slowly, with stirring, to 100 parts (weight) of diethylenetriamine in a reaction vessel equipped with a stirrer, thermometer and a condenser for collecting water distillate. The reaction mixture was stirred

and heated at a temperature of from 170°C. to 175°C. until amide formation was complete. After air cooling to approximately 140°C., hot water was added with stirring to provide about a 50% solids solution of polyaminopolyamide resin having an intrinsic viscosity of 0.14 measured on a 2% solution in aqueous 1 M $NH_4Cl$ at 25°C.

The preferred procedure for use in forming the precondensate as set forth in the first step of the process of this invention is described below.

Into a reaction vessel are placed about one mole of dicyandiamide (cyanoguanidine), from ¾ mole to 1½ moles of formaldehyde, water-soluble polyaminopolyamide in an amount sufficient to provide from ⅛ to ½ of an equivalent of basic nitrogen (as distinguished from the amide nitrogens of the polyaminopolyamide), and an acid in an amount equivalent to the amount of the basic nitrogen of the polyaminopolyamide. Suitable acids include sulfuric acid, hydrochloric acid, phosphoric acid, nitric acid, acetic acid, hydrobromic acid and hydroiodic acid. Water is conveniently employed as the reaction medium and sufficient water should be present in the mixture to provide an aqueous reaction mass than can be easily agitated (as by stirring) under reaction conditions. The amount of water employed is well within the skill of one versed in the art having before him the teachings of this invention. The acid forms the polyaminopolyamide acid salt reactant.

The aqueous mixture is subsequently heated to reflux temperature (95°C.—105°C.) and refluxed for a period of time of 15 minutes to 30 minutes (or longer, if desired). Subsequently, the ammonium salt is added in an amount such that there will be from 0.7 equivalent to 1.2 equivalents (preferably about 1 equivalent) of basic nitrogen derived from the salt of the polyaminopolyamide and the ammonium salt present in the reaction mixture. Thus, for example, when the polyaminopolyamide is emloyed in an amount equal to ½ (0.5) equivalent of basic nitrogen, the amount of ammonium salt employed will be such as to provide from 0.2 equivalent to 0.7 equivalent of basic nitrogen. The resulting mixture is heated to reflux and maintained at reflux temperature for 1 to 4 hours. Somewhat shorter periods of time can be used if the heating is carried out under moderate pressure.

In the second step of the process of this invention, there is added to the precondensate solution from 0.30 to 0.45 mole and preferably from 0.35 to 0.40 mole of epihalohydrin, acrylamide or urea per equivalent of basic nitrogen derived from the salt of the polyaminopolyamide and the ammonium salt. The resulting mixture is then heated to 50° to 110°C. and maintained at 50° to 110°C. until a solution of modified precondensate is formed. This will usually require a period of time from 0.25 hour to 1.5 hours. Preferably, when the reactant is epihalohydrin, the mixture is heated to and maintained at 50° to 80°C. for 15 to 45 minutes to form the modified precondensate. When the reactant is acrylamide or urea, however, slightly higher temperatures are generally required and the preferred temperature is 80° to 110°C. for 0.5 hour to 1.5 hours.

In steps (3) and (4) of the process of this invention, there are added to the modified precondensate from 1.25 to 3.75 moles of formaldehyde and the resulting mixture is then heated to between 60° and 100°C. and maintained thereat until the viscosity of an aqueous solution of the resinous reaction product, when measured at a solids content of 50% at 25°C. is from about U to Z and preferably from about V to W, on the Gardner-Holdt scale. This will usually require a period of time of from 20 minutes to 3 hours.

The resulting aqueous solution is usually diluted with water to a solids content of less than about 35% and preferably from 15% to 25% to terminate the reaction, and the pH is adjusted to from 6 to 7.5 to provide storage stability.

If desired, the water-soluble thermosettable resinous compositions produced in accordance with the process of this invention can be further modified. Post-modification is preferably carried out by diluting the solution of step (4), if necessary, to a solids content less than 35%, adding to the solution from 0.03 to 0.75 mole and preferably from 0.05 to 0.60 mole, per mole of formaldehyde added in step (3), of epihalohydrin or a nitrogen-containing compound of the formula NHRR′, where R and R′ are indépendently hydrogen, alkyl or hydroxyalkyl and, when R is hydrogen R′ is also aminoalkyl or an amido group, heating the mixture to 45° to 70°C. and maintaining thereat for 0.5 hour to 2 hours. The nitrogen-containing compounds which can be used in this step include ammonia, mono- or dialkyl-amines and particularly alkylamines wherein the alkyl group(s) contain(s) 1 to 4 carbon atoms, the mono- or di- alkanolamines, the alkylene diamines and urea. Particularly preferred compounds for the post-modification step are epichlorohydrin, ammonia, dimethylamine, diethanolamine, ethylenediamine and urea. The resulting solution will usually have a solids content of less than 35% and preferably from 15% to 25%. If the pH of the solution is outside of the range of 6.0 to 7.5, acid or base, as required, is preferably added to adjust the pH to between 6.0 and 7.5 to provide storage stability.

The best mode now contemplated for carrying out this invention is illustrated by the following examples of specific embodiments thereof. All percentages are by weight unless otherwise specified and the Gardner-Holdt viscosity measurements were made at 25°C.

## Example 1

Part 1 — Into a reaction vessel fitted with reflux condenser, mechanical stirrer and thermometer were placed the following to provide a mixture of ingredients:

| Ingredient | Grams |
|---|---|
| Polyaminopolyamide solution of Example A (50.6% solids) | 522 (1.24 equivalents of basic nitrogen) |
| Formaldehyde (37% aqueous solution) | 320 (3.97 moles) |
| Dicyandiamide | 269 (3.2 moles) |
| $H_2SO_4$ (98%) | 65.5 (.66 mole) |

Sulfuric acid was added last and was added dropwise. During addition of the sulfuric acid the temperature of the mixture is increased to about 40—45°C. The mixture was then heated to a temperature of about 100°C. and refluxed for about 15 minutes. Following cooling of the mixture to 85°C., 137.5 grams (1.04 moles) of ammonium sulfate were added and the mixture was heated at 100°C. for about 3 hours. The resulting solution of precondensate weighed 1295 grams and contained 64% solids.

Part 2 — Into a reaction vessel equipped with a mechanical stirrer, thermometer and reflux condenser were placed 133 grams of the precondensate solution of Part 1 and 12 grams (0.13 mole) of epichlorohydrin. The mixture was heated at 70°C. for 30 minutes, following which time 68 grams (0.84 mole) of 37% aqueous formaldehyde solution were added over a 5 minute period. The mixture was heated to 100°C. and maintained at 100°C. until the Gardner-Holdt viscosity of the aqueous solution of the resinous reaction product was W. Water. 350 ml, was added to the reaction vessel and the contents thereof cooled to room temperature (about 23°C.). The pH of the aqueous solution of the resinous reaction product was adjusted to 6.9 by adding thereto 10.5 ml of a 25% aqueous solution of sodium hydroxide. Total solids was 19% and the Gardner-Holdt viscosity of the aqueous solution was A—$1^+$.

## Example 2

Into a reaction vessel fitted with reflux condenser, mechanical stirrer and thermometer were placed 133 grams of the 64% solids precondensate solution of Example 1, Part 1 and 12 grams (0.13 mole) of epichlorohydrin. The mixture was heated at a temperature of 70°C for 30 minutes. There were then added to the reaction vessel 68 grams (0.84 mole) of 37% aqueous formaldehyde solution over a period of 5 minutes and the mixture was heated and maintained at 100°C. until the Gardner-Holdt viscosity of the resinous reaction product was $W^+$. Water, 110 ml, was added to the reaction vessel, the contents thereof cooled to 50°C., 22.1 grams (0.21 mole) of diethanolamine were added and the mixture was maintained at 50°C. for 2 hours. The solution was next cooled to room temperature and diluted with 200 ml of water. The pH of the solution was 7.2. Total solids of the aqueous solution was 21.2% and the Gardner-Holdt viscosity of the aqueous solution was A—$1^+$.

## Example 3

The procedure of Example 2 was repeated except that the reaction mixture was heated until the Gardner-Holdt viscosity was $W^-$. Water, 150 ml, was added to the vessel, the contents were cooled to 50°C., 23.6 grams (0.21 mole) of 40% aqueous dimethylamine solution were added and the mixture was maintained at 50°C. for 2 hours. The resulting solution was cooled to room temperature and diluted with 200 ml of water. The diluted solution had a pH of 7.1, a solids content of 19.5% and a Gardner-Holdt viscosity of A—$1^+$.

## Example 4

The procedure of Example 3 was repeated except that the reaction mixture was heated at 100°C. until the Gardner-Holdt viscosity was $X^+$, 12.1 grams (0.21 mole) of 29.4% aqueous ammonium hydroxide were substituted for the 23.6 grams of the dimethylamine solution, the mixture was heated at 50°C. for 1 hour and the diluted solution was adjusted to a pH of 6.9 with 5.7 ml of 25% aqueous sodium hydroxide. The resulting solution had a solids content of 18.7% and a Gardner-Holdt viscosity of A—$1^+$.

## Example 5

Part 1 — The procedure of Example 1, Part 1 was repeated and gave 1291 grams of a precondensate solution having a solids content of 62.1%.

Part 2 — The procedure of Example 3 was repeated except that 137.1 grams of the precondensate solution of Part 1 of this example were substituted for the precondensate solution of Example 1, Part 1, the reaction mixture was heated at 100°C. until the Gardner-Holdt viscosity was $W^+$, 24.3 grams (0.42 mole) of 29.4% aqueous ammonium hydroxide were substituted for the dimethylamine solution, the mixture was

heated at 50°C. for 1 hour and the cooled solution was diluted with 150 ml of water. The diluted solution had a pH of 7.0, a solids content of 21.5% and a Gardner-Holdt viscosity of A—1$^+$.

Example 6

The procedure of Example 5, Part 2 was repeated except that 12.6 grams (0.21 mole) of urea dissolved in 25 ml of water were substituted for the ammonium hydroxide and added to the contents of the vessel at 60°C., the mixture was heated at 70°C. for 30 minutes and the pH of the diluted solution was adjusted to 6.9 with 11 ml of 25% aqueous sodium hydroxide. The resulting solution had a total solids of 23.3% and a Gardner-Holdt viscosity of A—1$^+$.

Example 7

Part 1 — The procedure of Example 1, Part 1 was repeated and gave 1300 grams of a precondensate having a solids content of 62.5%.

Part 2 — Into a reaction vessel equipped with a mechanical stirrer, thermometer and reflux condenser were placed 272.4 grams of the precondensate solution of Part 1, above, and 24 grams (0.26 mole) of epichlorohydrin. The mixture was heated at a temperature of 70°C. for about 30 minutes and then 136 grams (1.68 moles) of 37% aqueous formaldehyde solution were added over a period of 5 minutes. The mixture was heated at 100°C. until the Gardner-Holdt viscosity of the aqueous solution of the resinous reaction product was W. Water, 300 ml, and then 19.4 grams (0.21 mole) of epichlorohydrin were added to the reaction vessel and the mixture was heated at 70°C. for 30 minutes. The resulting solution was cooled to room temperature and diluted with 300 ml of water. The pH of the aqueous solution of the resinous reaction product was adjusted to 7.0 by adding thereto 25.4 ml of a 25% aqueous solution of sodium hydroxide. Total solids was 22.1% and the Gardner-Holdt viscosity of the aqueous solution was A—2.

Example 8

Into a reaction vessel equipped with a mechanical stirrer, thermometer and reflux condenser were placed 272.4 grams of the precondensate solution of Example 7, Part 1 and 13.8 grams (0.26 mole) of acrylamide. The mixture was heated at 100°C. for 1 hour, cooled to 70°C. and then 136 grams (1.68 moles) of 37% aqueous formaldehyde solution were added over a 5 minute period. The mixture was heated to 100°C. and maintained at 100°C. until the Gardner-Holdt viscosity of the aqueous solution of the resinous reaction product was W. Water, 600 ml, was added to the reaction vessel and the contents thereof cooled to room temperature. The pH of the aqueous solution of the resinous reaction product was adjusted to 7.0 by adding thereto 31.8 ml of a 25% aqueous solution of sodium hydroxide. Total solids was 20.7% and the Gardner-Holdt viscosity of the aqueous solution was A—1$^+$.

Example 9

Into a reaction vessel fitted with a reflux condenser, mechanical stirrer and thermometer were placed 136.2 grams of the precondensate solution of Example 7, Part 1 and 6.9 grams (0.13 mole) of acrylamide. The mixture was heated at 100°C. for 1 hour, cooled to 70°C. and then 68 grams (0.84 mole) of 37% aqueous formaldehyde solution were added over a 5 minute period. The reaction mixture was heated at 100°C. until the Gardner-Holdt viscosity was W$^+$. Water, 150 ml, and then 9.7 grams (0.105 mole) of epichlorohydrin were added to the reaction vessel and the mixture was maintained at 70°C. for 30 minutes. The resulting solution was cooled to room temperature, diluted with 150 ml of water and the pH was adjusted to 7.0 with 25% aqueous sodium hydroxide. Total solids was 21.2% and the Gardner-Holdt viscosity was A—2$^-$.

Example 10

The procedure of Example 9 was repeated except that 3.0 grams (0.05 mole) of ethylenediamine were substituted for the 9.7 grams of epichlorohydrin. Total solids was 21.0% and the Gardner-Holdt viscosity was C$^+$.

Example 11

The procedure of Example 9 was repeated except that 12.1 grams (0.21 mole) of 29.4% aqueous ammonium hydroxide were substituted for the 9.7 grams of epichlorohydrin. The aqueous solution had a total solids content of 20.5% and a Gardner-Holdt viscosity of A—1$^+$.

Example 12

Example 11 was repeated except that 6.0 grams (0.105 mole) of aqueous ammonium hydroxide were used. The aqueous solution had a total solids of 21.1% and a Gardner-Holdt viscosity of A—1$^+$.

Example 13

Into a reaction vessel equipped with a mechanical stirrer, thermometer and reflux condenser were placed 272.4 grams of the precondensate solution of Example 7, Part 1 and 15.6 grams (0.26 mole) of urea. The mixture was heated at 100°C. for 1 hour, cooled to 70°C. and then 136 grams (1.68 moles) of 37% aqueous formaldehyde were added over a 5 minute period. The mixture was maintained at 70°C. until the Gardner-Holdt viscosity of the aqueous solution of the resinous reaction product was V—W. Water, 600 ml, was added to the reaction vessel and the contents thereof cooled to room temperature. The pH of the

aqueous solution of the resinous reaction product was adjusted to 7.0 by adding thereto 34 ml of a 25% aqueous solution of sodium hydroxide. Total solids was 21.2% and the Gardner-Holdt viscosity of the aqueous solution was A—1$^+$.

Example 14

Into a reaction vessel equipped with mechanical stirrer, thermometer and reflux condenser were placed 137.1 grams of the precondensate solution produced in Example 5, Part 1 and 7.8 grams (0.13 mole) of urea. The mixture was heated at 100°C. for 1 hour, cooled to 70°C. and then 68 grams (0.84 mole) of 37% aqueous formaldehyde solution were added over a 5 minute period. The mixture was maintained at 70°C. until the Gardner-Holdt viscosity of the aqueous solution of the resinous reaction product was W. Water, 150 ml, was added to the vessel and the contents were cooled to 50°C. Next, 3 grams (0.05 mole) of ethylenediamine were added to the vessel and the contents were heated at 70°C. for 30 minutes, after which time the resulting solution was cooled to room temperature, diluted with 150 ml of water and the pH was adjusted to 6.9 with 25% aqueous sodium hydroxide. Total solids was 22.2% and the Gardner-Holdt, viscosity of the diluted solution was B$^+$.

Example 15

The procedure of Example 14 was repeated except that 6.3 grams (0.105 mole) of urea dissolved in 25 ml of water were substituted for the 3 grams of ethylenediamine and added to the vessel with the contents at 60°C. Total solids was 21.7% and the Gardner-Holdt viscosity was A$^-$.

Example 16

The procedure of Example 14 was repeated except that following the addition of formaldehyde, the mixture was heated at 65°C. until the Gardner-Holdt viscosity was W$^+$, 12.1 grams (0.21 mole) of 29.4% aqueous ammonium hydroxide were substituted for the 3 grams of ethylenediamine and the pH of the diluted solution was adjusted to 7.0. Total solids was 21.9% and the Gardner-Holdt viscosity was A$^+$.

Example 17

The procedure of Example 14 was repeated except that 136.2 grams of the precondensate solution of Example 7, Part 1 were substituted for the precondensate solution of Example 5, Part 1, 9.7 grams (0.105 mole) of epichlorohydrin were substituted for the ethylenediamine and added to the vessel with the contents at 60°C., and the pH of the diluted solution was adjusted to 7.0. Total solids was 21.7% and the Gardner-Holdt viscosity was A—2.

The resinous reaction products produced in accordance with this invention are thermosettable and water-soluble. They have particular utility as sizing accelerators for hydrophobic cellulose reactive sizing agents such as acid anhydrides, isocyanates, and ketene dimers.

Hydrophobic acid anhydrides useful as cellulose reactive sizing agents for paper include (A) rosin anhydride (see U.S. Patent 3,582,464); (B) anhydrides having the structure:

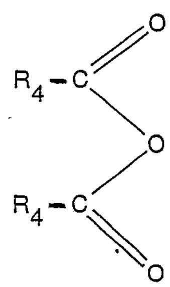

(I)

where each $R_4$ is alike or different and is a saturated or unsaturated hydrocarbon radical containing more than 7 and preferably 8 to 30 carbon atoms and is preferably selected from the group consisting of alkyl, alkenyl, aralkyl, aralkenyl and alkaryl radicals, and (C) cyclic dicarboxylic acid anhydrides having the structure:

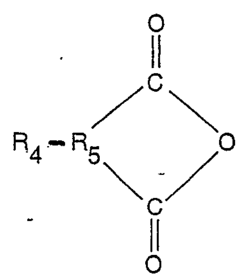

(II)

where $R_4$ is as above defined and $R_5$ represents a dimethylene or trimethylene radical. Specific examples of anhydrides of formula (I) are myristoyl anhydride, palmitoyl anhydride, oleoyl anhydride, and stearoyl anhydride. Substituted cyclic dicarboxylic acid anhydrides falling within the above formula (II) are substituted succinic and glutaric anhydrides such as isooctadecenyl succinic acid anhydride; n-hexadecenyl succinic acid anhydride, dodecyl succinic acid anhydride, decenyl succinic acid anhydride, octenyl succinic acid anhydride, and heptyl glutaric acid anhydride.

Isocyanates that can be used as cellulose reactive sizing agents include rosin isocyanate and isocyanates having the formula $R_4NCO$ where $R_4$ is as above defined. Specific examples of such isocyanates are octadecyl isocyanate, dodecyl isocyanate, tetradecyl isocyanate, hexadecyl isocyanate, eicosyl isocyanate, docosyl isocyanate and 6-phenyldecylisocyanate. Polyisocyanates such as 1,18-octadecyl diisocyanate and 1,12-dodecyl diisocyanate wherein one long chain alkyl group serves two isocyanate radicals and imparts hydrophobic properties to the molecule as a whole are also useful.

Ketene dimers used as cellulose reactive sizing agents are dimers having the formula:

$$[R_6CH=C=O]_2$$

where $R_6$ is a hydrocarbon radical, such as an alkyl having at least 8 carbon atoms, cycloalkyl having at least 6 carbon atoms, aryl, aralkyl or alkaryl. In naming ketene dimers, the radical "$R_6$" is named followed by "ketene dimer". Thus, phenyl ketene dimer is:

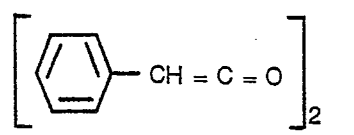 ;

benzyl ketene dimer is:

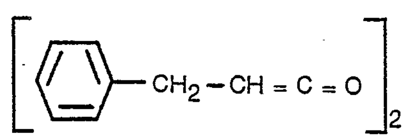 ;

and decyl ketene dimer is: $[C_{10}H_{21}—CH=C=O]_2$. Examples of ketene dimers include octyl, decyl, dodecyl, tetradecyl, hexadecyl, octadecyl, eicosyl, docosyl, tetracosyl, phenyl, benzyl, beta-naphthyl and cyclohexyl ketene dimers, as well as the ketene dimers prepared from montanic acid, naphthenic acid, $\Delta^{9,10}$-decylenic acid, $\Delta^{9,10}$-dodecylenic acid, palmitoleic acid, oleic acid, ricinoleic acid, linoleic acid, linolenic acid, and eleostearic acid, as well as ketene dimers prepared from naturally occurring mixtures of fatty acids, such as those mixtures found in coconut oil, babassu oil, palm kernel oil, palm oil, olive oil, peanut oil, rape oil, beef tallow, lard (leaf) and whale blubber. Mixtures of any of the above-named fatty acids with each other may also be used.

The following examples illustrate the use of the novel resinous compositions produced in accordance with this invention with a known ketene dimer paper sizing agent. The ketene dimer sizing agent was in emulsion form and contined, prior to dilution, 6.0% of the ketene dimer prepared from a mixture of palmitic and stearic acids and 1.5% of cationic starch as emulsion stabilizer.

Examples 18 to 34

Separate emulsions, each containing 0.10% of ketene dimer and 0.15% of one of the resinous reaction products of Examples 1 to 17 were prepared and evaluated in a pulp blend of 40% newsblank, 30% Rayonier bleached kraft and 30% Weyerhaeuser bleached hardwood kraft pulp beaten to a Canadian standard freeness of 350 cc. The pulp was diluted to 2.55%, the emulsion was added to the dilute stock and the pH was adjusted to 8. THe stock was formed into handsheets with a basis weight of 65 g/m$^2$ (40 lb./3000 ft.$^2$) and the sheets were dried to a moisture content of 3 to 5%. Part of the sheets was given an extra cure of 5 minutes at 105°C. In each case, the amount of emulsion used provided a total of 0.25% ketene dimer plus resinous reaction product, based on dry pulp weight.

The Table below sets forth the size test results on the paper sized in accordance with Examples 18 to 34 and with a control emulsion containing 0.10% ketene dimer and 0.15% of a resin produced according to the general procedure of Example 5 of U.S. Patent 3,840,486, a separate control being used for each series of tests. The resin solution used for the control had a solids content of 31.4% and was obtained by heating a solution containing 85.12 grams (based on solids) of precondensate prepared according to Example 1, Part 1 and 68 grams of 37% aqueous formaldehyde at 99°C. until the Gardner-Holdt viscosity was X, adding 100 ml. of 5% aqueous sodium hydroxide and cooling to room temperature. All size properties given herein were determined by use of the Hercules Sizing Tester using Test Solution No. 2 to 80% reflectance.

TABLE

| Example | Resinous Reaction Product of Example | Size Test Results in Seconds (Average of 5 Samples) | | | |
|---|---|---|---|---|---|
| | | Off Machine | Natural aging | | Cured for 5 min. @ 105°C. |
| | | | 1 day | 7 days | |
| 18 | 1 | 4 | 123 | 189 | 461 |
| CONTROL | — | 3 | 71 | 101 | 278 |
| 19 | 2 | 2 | 112 | 192 | 256 |
| 20 | 3 | 2 | 78 | 162 | 208 |
| 21 | 4 | 3 | 83 | 192 | 295 |
| CONTROL | — | 2 | 87 | 123 | 181 |
| 22 | 5 | 3 | 47 | 78 | 304 |
| 23 | 6 | 3 | 63 | 109 | 267 |
| CONTROL | — | 4 | 43 | 66 | 114 |
| 24 | 7 | 3 | 118 | 170 | 350 |
| 25 | 8 | 2 | 123 | 204 | 549 |
| CONTROL | — | 3 | 71 | 101 | 278 |
| 26 | 9 | 1 | 26 | 33 | 33 |
| 27 | 10 | 2 | 20 | 24 | 94 |
| 28 | 11 | 2 | 18 | 29 | 72 |
| 29 | 12 | 2 | 27 | 43 | 118 |
| CONTROL | — | 2 | 8 | 11 | 39 |
| 30 | 13 | 3 | 119 | 206 | 497 |
| CONTROL | — | 3 | 71 | 101 | 278 |
| 31 | 14 | 3 | 51 | 83 | 276 |
| 32 | 15 | 3 | 56 | 89 | 327 |
| CONTROL | — | 4 | 43 | 66 | 114 |
| 33 | 16 | 3 | 58 | 94 | 362 |
| CONTROL | — | 2 | 42 | 55 | 216 |
| 34 | 17 | 2 | 29 | 36 | 105 |
| CONTROL | — | 2 | 8 | 11 | 39 |

The resinous compositions produced in accordance with this invention, when employed in combination with hydrophobic cellulose reactive sizing agents in the internal or surface sizing of paper, accelerate the rate at which sizing develops and provide high ultimate sizing on natural aging or oven curing. The compositions can be added either separately to the paper pulp (for internal sizing) or separately to the paper sheet (for external sizing), either before or after addition of sizing agent. Alternatively, the resinous composition and sizing agent can be added at the same time to the paper pulp or paper sheet as separate aqueous emulsions or as a single emulsion comprised of the two ingredients. The range of proportions of the sizing agent and the resinous composition can vary from 1:3 to 3:1 and the amount of resinous composition incorporated into the paper sheet will usually be from 0.05% to 0.5% (preferably from 0.05% to 0.25%) by weight based on the dry weight of the paper.

**Claims**

1. A process for preparing a water-soluble thermosettable resinous composition containing dicyandiamide-formaldehyde condensates, including the steps (1) of refluxing an aqueous mixture of 1 mole of dicyandiamide, 0.75 mole to 1.5 moles of formaldehyde, 0.125 to 0.5 equivalent of basic nitrogen in the form of an acid salt of a water-soluble polyaminopolyamide, and an additional fractional equivalent of basic nitrogen in the form of an ammonium salt to provide a total of from 0.7 equivalent to 1.2 equivalents of basic nitrogen in the aqueous mixture (3), adding to the precondensate solution thus formed a further 1.25 to 3.75 moles of formaldehyde, and heating the mixture at 60° to 100°C., characterized in a) that in a step (2) (before step (3)) from 0.30 to 0.45 moles of epihalohydrin, acrylamide or urea per equivalent of the total basic nitrogen derived from the salt of the polyaminopolyamide and the ammonium salt are added to the precondensate solution and the mixture is heated at 50° to 110°C. for 0.25 to 1.5 hours, prior to the addition of formaldehyde, and b) that in a step (4) the final mixture containing the further addition of formaldehyde is heated until the viscosity of the aqueous solution of the reaction product at a solids content of 50% is from about U to Z on the Gardner-Holdt scale.

2. The process of Claim 1 wherein epichlorohydrin is added to the precondensate solution and the aqueous mixture is heated at 50° to 80°C. for 15 to 45 minutes.

3. The process of Claim 1 wherein acrylamide is added to the precondensate solution and the aqueous mixture is heated at 80° to 110°C. for 0.5 to 1.5 hours.

4. The process of Claim 1 wherein urea is added to the precondensate solution and the aqueous mixture is heated at 80°C to 110°C. for 0.5 to 1.5 hours.

5. The process of Claims 2 to 4 characterized in that the final solution is diluted, if necessary, to a solids content less than 35%, from 0.03 to 0.75 mole, per mole of formaldehyde added in step (3) of epihalohydrin or a nitrogen containing compound of the formula NHRR' where R and R' are independently hydrogen, alkyl or hydroxyalkyl and, when R is hydrogen, R' also is aminoalkyl or an amido group is added and the resulting mixture is heated at 45° to 70°C. for 0.5 hour to 2 hours.

6. The process of Claim 5 wherein the nitrogen-containing compound is ammonia, ethylenediamine, diethanolamine, dimethylamine or urea.

7. An aqueous solution of the water-soluble thermosettable resinous composition produced by the process of Claims 1 to 6.

8. The method of sizing paper wherein an emulsion of a hydrophobic cellulose reactive sizing agent is employed, characterized in that there is employed in combination therewith the aqueous solution of the resinous composition of Claim 7, the amount of resinous composition being from 0.05 to 0.5% by weight based on the weight of paper.

**Patentansprüche**

1. Verfahren zur Herstellung einer wasserlöslichen, wärmehärtbaren Harzzusammensetzung, enthaltend Dicyandiamid-Formaldehyd-Kondensate, einschließend die Stufen (1) des Rückflußkochens eines wässrigen Gemischs aus einem Mol Dicyandiamid, 0,75 Mol bis 1,5 Mol Formaldehyd, 0,125 bis 0,5 Äquivalentenbasischen Stickstoffs in Form eines Säuresalzes eines wasserlöslichen Polyaminopolyamids, und einem weiteren Bruchteil-Äquivalent basischen Stickstoffs in Form eines Ammoniumsalzes zu insgesamt 0,7 bis 1,2 Äquivalenten basischen Stickstoffs in dem wässrigen Gemisch, (3) der Zugabe zu der so gebildeten Vorkondensat-Lösung von weiteren 1,25 bis 3,75 Mol Formaldehyd und Erwärmens des Gemischs auf 60° bis 100°C, dadurch gekennzeichnet, daß a) in einer Stufe (2) vor Stufe (3) 0,30 bis 0,45 Mol Epihalogenhydrin, Acrylamid oder Harnstoff pro Äquivalent des aus dem Salz des Polyaminopolyamids und dem Ammoniumsalz stammenden basischen Gesamtstickstoffs der Vorkondensatlösung zugegeben werden und das Gemisch auf 50 bis 110°C für 0,25 bis 1,5 h vor der Zugabe von Formaldehyd erwärmt wird und daß b) in einer Stufe (4) das fertige, den weiteren Formaldehyd-Zusatz enthaltende Gemisch erwärmt wird, bis die Viskosität der wässrigen Lösung des Reaktionsprodukts bei einem Feststoffgehalt von 50% von etwa U bis Z auf der Gardner-Holdt-Skala ist.

2. Verfahren nach Anspruch 1, worin Epichlorhydrin zu der Vorkondensat-Lösung gegeben und das wässrige Gemisch auf 50° bis 80°C für 15 bis 45 min erwärmt wird.

3. Verfahren nach Anspruch 1, worin Acrylamid zu der Vorkondensatlösung gegeben und das wässrige Gemisch auf 80° bis 110°C für 0,5 bis 1,5 h erwärmt wird.

4. Verfahren nach Anspruch 1, worin Harnstoff zu der Vorkondensatlösung gegeben und das wässrige Gemisch auf 80° bis 110°C für 0,5 bis 1,5 h erwärmt wird.

5. Verfahren nach den Ansprüchen 2 bis 4, dadurch gekennzeichnet, daß die fertige Lösung, wenn nötig, auf einen Feststoffgehalt unter 35% verdünnt wird, 0,03 bis 0,75 Mol pro Mol in Stufe (3) zugesetzten Formaldehyds an Epihalogenhydrin oder einer stickstoffhaltigen Verbindung der Formel NHRR', worin R und R' unabhängig Wasserstoff, Alkyl oder Hydroxyalkyl sind und, wenn R Wasserstoff ist, R' auch Aminoalkyl oder eine Amidogruppe ist, zugegeben werden und das anfallende Gemisch 0,5 bis 2 h auf 45° bis 70°C erwärmt wird.

6. Verfahren nach Anspruch 5, worin die stickstoffhaltige Verbindung Ammoniak, Ethylendiamin, Diethanolamin, Dimethylamin oder Harnstoff ist.

7. Wässrige Lösung der wasserlöslichen, wärmehärtbaren harzartigen Zusammensetzung, hergestellt nach dem Verfahren der Ansprüche 1 bis 6.

8. Verfahren zum Leimen von Papier, worin eine Emulsion eines hydrophoben, cellulosereaktiven Leimungsmittels verwendet wird, dadurch gekennziechnet, daß in Kombination damit die wässrige Lösung der harzartigen Zusammensetzung von Anspruch 7 verwendet wird, wobei die Menge harzartiger Zusammensetzung von 0,05 bis 0,5 Gew.-%, bezogen auf das Papiergewicht, ist.

**Revendications**

1. Procédé pour la préparation d'une composition résineuse thermodurcissable hydrosoluble contenant des produits de condensation de dicyandiamide-formaldéhyde, comprenant les phases consistant: (1) à chauffer au reflux un mélange aqueux de 1 mol de dicyandiamide, 0,75 mol à 1,5 mol de formaldéhyde, 0,125 à 0,5 équivalent d'azote basique sous la forme d'un sel acide d'un polyaminopolyamide hydrosoluble et un équivalent fractionnaire complémentaire d'azote basique sous la forme d'un sel d'ammonium, pour donner un total de 0,7 équivalent à 1,2 équivalent d'azote basique dans le mélange aqueux, et (3) à ajouter à la solution de précondensat ainsi formée une quantité supplémentaire de 1,25 à 3,75 mol de formaldéhyde et à chauffer le mélange à une température de 60 à 100°C, caractérisé (a) en ce que, dans une phase (2) précédant la phase (3), 0,30 à 0,45 mol d'épihalohydrine, d'acrylamide ou d'urée par équivalent de l'azote basique total provenant du sel du polyaminopolyamide et du sel d'ammonium sont ajoutées à la solution de précondensat et le mélange est chauffé à une température de 50 à 110°C pendant 0,25 à 1,5 h, avant l'addition de formaldéhyde, et (b) en ce que, dans une phase (4), le mélange final contenant la quantité supplémentaire ajoutée de formaldéhyde est chauffé jusqu'à ce que la viscosité de la solution aqueuse du produit de la réaction, à une teneur en matières solides de 50%, se situe environ entre U et Z sur l'échelle de Gardner-Holdt.

2. Procédé selon la revendication 1, dans lequel de l'épichlorhydrine est ajoutée à la solution de précondensat et le mélange aqueux est chauffé à une température de 50 à 80°C pendant 15 à 45 mn.

3. Procédé selon la revendication 1, dans lequel de l'acrylamide est ajouté à la solution de précondensat et le mélange aqueux est chauffé à une température de 80 à 110°C pendant 0,5 à 1,5 h.

4. Procédé selon la revendication 1, dans lequel de l'urée est ajoutée à la solution de précondensat et le mélange aqueux est chauffé à une température de 80 à 110°C pendant 0,5 à 1,5 h.

5. Procédé selon l'une quelconque des revendications 2 à 4, caractérisé en ce que la solution finale est diluée, si nécessaire à une teneur en matières solides inférieure à 35%, on ajoute 0,03 à 0,75 mol, par mol de formaldéhyde ajoutée dans la phase (3), d'une épihalohydrine ou d'un composé azoté de formule NHRR', dans laquelle R et R' représentent, indépendamment l'un de l'autre, un atome d'hydrogène, un radical alkyle ou hydroxyalkyle et, lorsque R est un atome d'hydrogène, R' peut être également un groupe aminoalkyle ou amido, et le mélange résultant est chauffé à une température de 45 à 70°C pendant 0,5 à 2 h.

6. Procédé selon la revendication 5, dans lequel le composé azoté est l'ammoniac, l'éthylènediamine, la diéthanolamine, la diméthylamine ou l'urée.

7. Solution aqueuse de la composition résineuse thermodurcissable hydrosoluble préparés par le procédé selon l'une quelconque des revendications 1 à 6.

8. Procédé d'encollage du papier, dans lequel une émulsion d'un agent d'encollage hydrophobe réactif à la cellulose est utilisée, caractérisé en ce qu'il est utilisé, en combinaison avec cette émulsion, la solution aqueuse de la composition résineuse selon la revendication 7, la quantité de composition résineuse étant comprise entre 0,05 et 0,5% en poids sur la base du poids du papier.